# EUROPÄISCHE PATENTSCHRIFT

(11) **EP 3 454 152 B1**
(45) Veröffentlichungstag und Bekanntmachung des Hinweises auf die Patenterteilung: **19.02.2025**
(21) Anmeldenummer: 17189689.7
(22) Anmeldetag: 06.09.2017
(51) Int. Cl.: G05B 19/418

(54) **AUTOMATISIERUNGSSYSTEM ZUR STEUERUNG EINER MASCHINE ODER ANLAGE**
AUTOMATION SYSTEM FOR CONTROLLING A MACHINE OR AN INSTALLATION
SYSTÈME D'AUTOMATISATION POUR COMMANDER UNE MACHINE OU UNE INSTALLATION

(43) Veröffentlichungstag der Anmeldung: 13.03.2019
(73) Patentinhaber: Leuze electronic GmbH + Co. KG, 73277 Owen/Teck (DE)
(72) Erfinder: Köbel, Herbert, 73277 Owen/Teck (DE); Quapil, Dr., Gerald, 73277 Owen/Teck (DE)
(74) Vertreter: Ruckh, Rainer Gerhard

(56) Entgegenhaltungen:
- EP-A2- 3 070 548
- DE-A1- 102010 042 716
- US-A1- 2004 249 651
- US-A1- 2013 211 547
- US-A1- 2014 148 969
- US-A1- 2016 246 294
- US-A1- 2017 075 343
- LEUZE: "Leuze Electronic kooperiert mit Microsoft", 1 February 2017 (2017-02-01), XP055452447, Retrieved from the Internet <URL:http://www.git-sicherheit.de/printpdf/23260> [retrieved on 20180219]
- MESSTEC DRIVES AUTOMATION: "Smart Sensor business: Keine Industrie 4.0 ohne intelligente Sensorik", 7 March 2017 (2017-03-07), XP055454942, Retrieved from the Internet <URL:http://www.md-automation.de> [retrieved on 20180227]

## Beschreibung

Die Erfindung betrifft eine Maschinensteuerung gemäß dem Anspruch 1.

Derartige Automatisierungssysteme dienen generell zur Steuerung von Maschinen oder Anlagen. Maschinen oder Anlagen, auf welche sich die vorliegende Erfindung bezieht, können in unterschiedlichsten Ausprägungen ausgebildet sein, wobei hierzu insbesondere auch bewegliche Systeme, wie zum Beispiel Roboter oder fahrbare Maschinen gehören.

Generell sind zur Steuerung der Maschine oder Anlage eine Maschinensteuerung in einer Steuerungsebene und eine Anzahl von Sensoren und/Aktoren in einer Sensor-Aktorebene vorgesehen. Die Sensoren beziehungsweise Aktoren übernehmen Überwachungsfunktionen oder prozesssteuernde Funktionen an der Maschine oder Anlage. Diese Sensoren und/oder Aktoren sind an Ein- und Ausgänge der Maschinensteuerung angeschlossen. Die Maschinensteuerung liest damit in den Sensoren und/oder Aktoren generierte Signale und generiert, insbesondere in Abhängigkeit dieser Signale Steuerbefehle, um den Betrieb der Maschine oder Anlage zu steuern.

In bekannten Automatisierungssystemen ist zur Steuerung der Maschine oder Anlage ein Kommunikationsmodell einer Automatisierungspyramide vorgesehen, die neben der Sensor-Aktorebene und der dieser übergeordneten Steuerungsebene weitere Ebenen umfasst. Hierzu gehört im Allgemeinen eine der Steuerungsebene übergeordnete Prozessleitebene mit einem Prozessleitsystem. Darüber gibt es im Allgemeinen eine Betriebsleitebene mit Systemen zur Produktionsdatenerfassung und zur Produktionsfeinplanung sowie eine noch weiter übergeordnete Unternehmensebene mit Systemen zur Bestellabwicklung und Produktionsgrobplanung.

Ein Vorteil derartiger Automatisierungssysteme besteht darin, dass mit der Maschinensteuerung auch schnell ablaufende Prozesse, insbesondere in Echtzeit ablaufende Steuer- und Regelvorgänge für die Maschine oder Anlage durchgeführt werden können.

Ein Nachteil des hierarchisch aufgebauten Kommunikationsmodells einer Automatisierungspyramide besteht darin, dass an die Maschinensteuerung einerseits alle Sensoren und/oder Aktoren angeschlossen sind und andererseits auch die Kommunikation mit Systemen in den übergeordneten Ebenen über die Maschinensteuerung läuft, wodurch der Aufwand für die Maschinensteuerung insbesondere hinsichtlich ihrer Ein- und Ausgangsstruktur unerwünscht groß ist.

In Leuze: "Leuze Electronic kooperiert mit Microsoft", 1. Februar 2017, XP055452447, gefunden im Internet:
URL:http://www.git-sicherheit.de/printpdf/23260 (D1)
sind Sensoren beschrieben, die in ein Automatisierungssystem eingebunden sind. Die Sensoren weisen Schnittstellen auf, die um ein OPC UA-Kommunikationsmodell erweitert sind. Damit ist es möglich einen Datenaustausch der Sensoren direkt mit einer Cloud bereitzustellen. Über die Schnittstellen erfolgt ein manipulationssicherer Datenaustausch, in dem zu übertragende Daten mit Authentifizierungen, Autorisierungen, Verschlüsselungen und Datenintegritäten mit Signaturen abgesichert sind.

Die US 2016/024 62 94 A1 (D2) betrifft ein Automatisierungssystem mit Feldgeräten, die mit einer Rechnereinheit in ein Netzwerk eingebunden sind. Für das Automatisierungssystem wird ein Anlagenmodell vorgegeben, das mit der Rechnereinheit kontrolliert wird. Die Feldgeräte können als Sensoren ausgebildet sein. Die Rechnereinheit ist insbesondere ein Cloud-Rechner. Die Feldgerätekönnen direkt mit der Rechnereinheit Daten austauschen.

Die US 2017/0075343 A1 betrifft ein System mit einem Feldgerät, das über eine Schnittstelle direkt mit einem Cloud-Rechner kommunizieren kann. Das Feldgerät kann als Sensor ausgebildet sein.

In Messtec Drives Automation: "Smart Sensor business: Keine Industrie 4.0 ohne intelligente Sensorik", 7. März 2017, XP055454942, Gefunden im Internet: URL:http://www.md-automation.de
ist die Integration von Sensoren in ein cloudbasiertes Steuerungsmodell beschrieben.

Die US 2013/0211547 A1 betrifft ein Verfahren zum Integrieren von zumindest einem Feldgerät in ein Netzwerk der Automatisierungstechnik, bestehend aus mehreren in einer Automatisierungsanlage verteilt angeordneten Feldgeräten, die über zumindest einen Datenbus, auf dem ein Busprotokoll läuft, miteinander verbunden sind. Der Zugriff auf die Feldgeräte erfolgt über eine Feldzugriffseinheit, die mit zumindest einer Automatisierungs-/Integrations-Plattform und zumindest einem WebServer eines Service Providers kommuniziert.

Die DE 10 2010 042 716 A1 betrifft ein System zum Betreiben einer Automatisierungsanlage mit mehreren in der Feldebene verteilt angeordneten Feldgeräten (F1, F2, F3), die über zumindest einen Datenbus (DB), auf dem ein Busprotokoll läuft, miteinander verbunden sind, wobei der Zugriff auf die Feldgeräte (F1, F2, F3) über eine Feldzugriffseinheit (PAP) erfolgt, die mit zumindest einer Automatisierungs-/Integrations-Plattform und zumindest einem WebServer (OPC-UA Server) eines Service Providers verbunden ist. Die geschäftsrelevante Logik (BI1, BI2, BI3, BI4) ist zumindest teilweise in zumindest einem der Feldgeräte (F1, F2, F3) und/oder in der Feldzugriffseinheit (PAP) gespeichert.

Die EP 3 070 548 A2 betrifft einen cloudbasierten Controller, der physikalische Einheiten oder Prozesse eines Automatisierungssystems steuert. Der Controller kann Informationen analysieren und auf Basis der Analyseergebnisse Kontrollinstruktionen generieren.

Die US 2014/0148969 A1 betrifft ein cloudbasiertes System mit mehreren räumlich verteilten Kühlvorrichtungen, die Temperatursensoren aufweisen. In einer Cloud werden Prozessdaten der Kühlvorrichtungen gespeichert. Zudem sind dort Module zur Durchführung von Temperaturkontrollen vorgesehen.

Die EP 3 070 548 A2 betrifft ein Automatisierungssystem, dem ein cloud-basierter industrieller Controller zugeordnet ist. Der Controller kontrolliert Einheiten und Prozesse des Automatisierungssystems. Hierzu sammelt der Controller über ein Gateway Informationen des Automatisierungssystems. Abhängig hiervon generiert der Controller Kontrollanweisungen für das Automatisierungssystem.

Die US 2014/148969 A1 betrifft ein cloud-basiertes System für Kühleinheiten. Jede Kühleinheit weist als Steuereinheit einen Microprozessor mit einer Firmware auf. Die Firmware wertet Sensordaten von Sensoren aus und kontrolliert Zustände von Aktoren. Diese Funktionen werden von einer Cloud kontrolliert.

Die US 2004/0249651 A1 betrifft ein Prozesskontrollsystem zum Betrieb einer technischen Installation. Das Prozesskontrollsystem umfasst einen Prozesskontrollcomputer als zentrale Steuerung sowie mehrere dezentrale Feldgeräte, in denen eine Kontroll-Software implementiert ist. Damit können Einheiten der technischen Installation überwacht und gesteuert werden.

Der Erfindung liegt die Aufgabe zugrunde, ein Automatisierungssystem mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Das erfindungsgemäße Automatisierungssystem dient zur Steuerung einer Maschine oder Anlage und umfasst eine Maschinensteuerung in einer Steuerungsebene und eine Anzahl von der Maschine oder Anlage zugeordneten Sensoren und/oder Aktoren in einer Sensor-Aktorebene. Der Maschinensteuerung werden Sensorsignale der Sensoren und/oder Aktorsignale der Aktoren zugeführt. In der Maschinensteuerung werden Steuerbefehle für die Maschine oder Anlage generiert. Die Sensoren und/oder Aktoren tauschen über das Internet mittels manipulationssicheren Protokolle direkt Informationen mit einem wenigstens eine Rechnereinheit aufweisenden Rechnernetzwerk aus, wobei die Sensoren anhand einer eindeutigen Kennung von dem Rechnernetzwerk identifizierbar sind. In dem Rechnernetzwerk werden Steuerbefehle für die Maschine oder Anlage generiert, welche an wenigstens einen Sensor oder Aktor übertragen werden. In jedem Sensor oder Aktor sind Steuermittel zur Steuerung der Maschine oder Anlage in Abhängigkeit eines Steuerbefehls des Rechnernetzwerks ausgebildet. Speichermittel zur Speicherung der Kennung und Kommunikationsmittel zur Kommunikation mit dem Rechnernetzwerk sind vorhanden. Mit den Steuermitteln wird abhängig von einem Steuerbefehl des Rechnernetzwerks die Maschine oder Anlage direkt und ohne Umweg über die Maschinensteuerung gesteuert.

Der Grundgedanke der Erfindung besteht somit darin, dass die der Maschine oder Anlage zugeordneten Sensoren und/oder Aktoren nicht allein von der übergeordneten Maschinensteuerung gesteuert sind. Vielmehr sind die Sensoren und/oder Aktoren über das Internet mit einem verteilten, das heißt nicht lokal an die Maschine angebundenen Rechnernetzwerk verbunden, das heißt die Sensoren und/oder Aktoren kommunizieren mit einer Cloud, wobei dadurch weitere Steuerbefehle, zusätzlich zu den Steuerbefehlen in der Maschinensteuerung, generiert werden.

Wesentlich ist, dass die Kommunikation der Sensoren und/oder Aktoren mit der Cloud nicht über die Maschinensteuerung erfolgt, sondern direkt mit der Cloud. Die Maschinensteuerung kann damit einen einfacheren Aufbau aufweisen, da deren Funktionalität auf einige wesentliche Grundfunktionen beschränkt sein kann. Dies führt insbesondere zu einer konstruktiven Vereinfachung der Maschinensteuerung, insbesondere dahingehend, dass die Anzahl der kostenaufwändigen Ein- und Ausgänge bei der Maschinensteuerung begrenzt werden kann.

Besonders vorteilhaft werden, abhängig von geforderten Reaktionszeiten für Steuerbefehle, diese von der Maschinensteuerung oder von dem Rechnernetzwerk generiert.

Insbesondere werden Steuerbefehle mit kurzen Reaktionszeiten von der Maschinensteuerung und Steuerbefehle mit längeren Reaktionszeiten von dem Rechnernetzwerk durchgeführt.

Da die Maschinensteuerung schnelle Steuer- und Regelvorgänge, insbesondere in Echtzeit, durchführen kann, werden derartige Prozesse mit dieser Maschinensteuerung durchgeführt. Zeitunkritischere Vorgänge, wie zum Beispiel das Starten oder Stoppen der Maschine oder Anlage werden über die Cloud durchgeführt, wodurch die Maschinensteuerung entlastet wird.

Bei dem erfindungsgemäßen Automatisierungssystem werden somit sowohl die Funktionen einer lokalen Maschinensteuerung als auch einer Cloud, das heißt einem über das Internet verbundenen verteilten Rechnernetzwerk genutzt und zwar derart, dass sich deren Funktionalitäten optimal ergänzen. Die Aufteilung der von der Maschinensteuerung und dem Rechnernetzwerk durchzuführenden Aufgaben erfolgt zweckmäßig über das Rechnernetzwerk. Hierzu kann zum Beispiel ein autorisierter Benutzer entsprechende Eingaben im Rechnernetzwerk durchführen.

Eine wesentliche Voraussetzung für die Funktion des erfindungsgemäßen Automatisierungssystems besteht darin, dass in jedem Sensor oder Aktor Steuermittel, Speichermittel und Kommunikationsmittel integriert sind, wobei mittels der Steuermittel die Maschine oder Anlage in Abhängigkeit eines Steuerbefehls des Rechnernetzwerks steuerbar ist, wobei in den Speichermitteln die Kennung gespeichert ist, und wobei mittels der Kommunikationsmittel die Kommunikation mit dem Rechnernetzwerk erfolgt.

Damit sind die Sensoren beziehungsweise Aktoren zur Kommunikation mit der Cloud ausgebildet. Durch die Abspeicherung von eindeutigen Kennungen, insbesondere Adressen, sind diese Sensoren beziehungsweise Aktoren eindeutig in der Cloud identifizierbar.

Durch die in den Sensoren beziehungsweise Aktoren vorgesehenen Kommunikationsmittel können diese mit dem Rechnernetzwerk bidirektional Informationen austauschen.

Die Kommunikation erfolgt dabei zweckmäßig über standardisierte Software-Protokolle, wie zum Beispiel dem OPC-UA-Protokoll, wobei hierzu als Kommunikationsmittel in den Sensoren beziehungsweise Aktoren entsprechende Software-Module vorhanden sind.

Wesentlich ist, dass diese Kommunikation manipulationssicher ist, was insbesondere durch eine Absicherung der übertragenen Informationen durch Prüfsummen erreicht wird.

Die übertragenen Informationen enthalten vorzugsweise Daten und Metadaten. Bei den Daten kann es sich beispielsweise um Messwerte eines Sensors handeln, welche in Form von Zahlenwerten übertragen werden. Die diesen zugeordneten Metadaten definieren, um welche Art von Messwerten es sich handelt, beispielsweise um Distanzwerte mit einer bestimmten Einheit wie mm oder cm.

Wesentlich ist weiter, dass jeder Sensor oder Aktor Steuermittel enthält. Mit diesen Steuermitteln kann abhängig von einem Steuerbefehl des Rechnernetzwerks die Maschine oder Anlage direkt und ohne Umweg über die Maschinensteuerung gesteuert werden. Im einfachsten Fall umfassen die Steuermittel einen Steuerausgang, über welchen ein Signal, im einfachsten Fall ein binäres Schaltsignal, an die Maschine oder Anlage ausgegeben wird.

Die Sensoren und/oder Aktoren weisen somit eine erweiterte Funktionalität auf.

Gemäß einer vorteilhaften Ausführungsform werden von wenigstens einem Sensor oder Aktor periodisch Signallaufzeiten für die Kommunikation mit dem Rechnernetzwerk ermittelt, und abhängig von der Signallaufzeit sind die applikationsspezifische Funktionalität des Sensors oder Aktors definierende Software-Module in dem Rechnernetzwerk gespeichert oder in den Sensor oder Aktor geladen.

Dadurch wird die Funktionalität der Sensoren und/oder Aktoren weiter erweitert. Abhängig von der durchgeführten Ermittlung der Signallaufzeiten kann der jeweilige Sensor und/oder Aktor bestimmen ob Funktionen, insbesondere für die Maschine oder Anlage relevante Funktionen, von dem Rechnernetzwerk oder von dem jeweiligen Sensor oder Aktor selbst durchgeführt werden. Damit kann das Zusammenwirken der einzelnen Komponenten des Automatisierungssystems auf einfache Weise optimiert werden.

Gemäß einer vorteilhaften Ausführungsform werden in einem Sensor oder Aktor generierte Zustandsinformationen mit oder ohne einen Selbsttest an das Rechnernetzwerk übertragen.

Die Zustandsinformationen können Messwerte, die mit den Sensoren erfasst wurden, aktuelle Zustände der Aktoren sowie Parameter der Sensoren und Aktoren umfassen.

Abhängig von diesen Zustandsinformationen können in der Cloud Steuerbefehle generiert werden, die zur Ausführung an wenigstens einen Sensor oder Aktor weitergegeben werden. Mit einem solchen Steuerbefehl kann zum Beispiel der Betrieb der Maschine oder Anlage gestartet oder gestoppt werden. Beispielsweise kann in der Cloud anhand der Zustandsinformationen geprüft werden, ob alle Sensoren und/oder Aktoren vorhanden sind und bestimmte Zustände einnehmen, so dass dann ein Steuerbefehl für den Start der Maschine generiert wird.

Gemäß einer vorteilhaften Weiterbildung sind im Rechnernetzwerk maschinen- oder anlagenrelevante Daten gespeichert, welche an Sensoren und/oder Aktoren übertragbar sind.

Bei diesen Daten kann es sich beispielsweise um Daten des Betreibers der Maschine oder Anlage handeln. Diese können gegebenenfalls als vertrauliche Daten so im Rechnernetzwerk hinterlegt sein, dass diese nur autorisierten Benutzern zugänglich sind. Je nach Applikation können diese Daten oder Teilmengen hiervon in einen Sensor und/oder Aktor geladen werden.

Gemäß einer besonders vorteilhaften Ausgestaltung der Erfindung ist die Steuerungsebene und die Sensor-Aktorebene Bestandteil eines Kommunikationsmodells einer Automatisierungspyramide mit weiteren Ebenen, wobei das Rechnernetzwerk direkt mit Systemen in den weiteren Ebenen kommuniziert.

Beispielsweise können abhängig von den Zustandsinformationen der Sensoren und/oder Aktoren Informationen über eine notwendige Wartung von Komponenten der Anlage oder von notwendigen Nachbestellungen von Geräten oder Maschinen gewonnen werden. Davon abhängig kann über die Cloud beispielsweise eine Bestellabwicklung oder ein Produktionsplanungssystem in einer übergeordneten Ebene wie einer Betriebsleitebene oder Unternehmens ebene angesprochen werden um dadurch die notwendigen Aktionen auszulösen.

Gemäß einer weiteren vorteilhaften Ausführungsform der Erfindung kommuniziert das Rechnernetzwerk direkt mit Sensoren und/oder Aktoren oder Systemen in weiteren Ebenen eines Kommunikationsmodells einer Automatisierungspyramide von verschiedenen Maschinen oder Anlagen.

Damit ist das Automatisierungssystem auf mehrere Anlagen oder Maschinen erweitert. Vorteilhaft hierbei ist, dass die Cloud anlagenübergreifend Informationen in den Sensoren und/oder Aktoren Informationen aufnehmen kann und diese gemeinsam auswerten kann um spezifisch für bestimmte Maschinen oder Anlagen Steuerbefehle zu generieren.

Gemäß einer vorteilhaften Ausführungsform der Erfindung sind die Sensoren ganz oder teilweise optische Sensoren, insbesondere zur Objektdetektion, Objektidentifikation oder zur geometrischen Messung eines Objektabstands, einer Oberflächenkontur oder eines Objektvolumens.

Die Erfindung wird im Folgenden anhand der Zeichnungen erläutert. Es zeigen:
- Figur 1:: Schematische Prinzipdarstellung des erfindungsgemäßen Automatisierungssystems.
- Figur 2:: Schematische Darstellung eines Sensors für das Automatisierungssystem gemäß Figur 1.
- Figur 3:: Erstes Ausführungsbeispiel des erfindungsgemäßen Automatisierungssystems.
- Figur 4:: Zweites Ausführungsbeispiel des erfindungsgemäßen Automatisierungssystems.

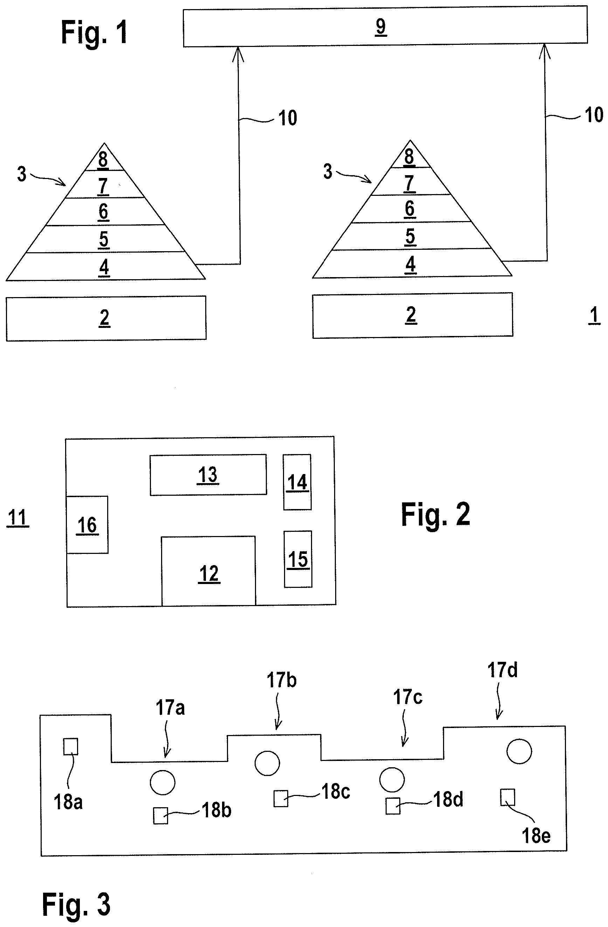

Figur 1 zeigt den prinzipiellen Aufbau des erfindungsgemäßen Automatisierungssytems 1. Mit dem erfindungsgemäßen Automatisierungssystem 1 werden im vorliegenden Fall zwei Anlagen 2 gesteuert. Generell können mit dem Automatisierungssystem 1 auch Maschinen aller Art gesteuert werden. Weiterhin können mit dem Automatisierungssystem 1 auch nur eine oder mehr als zwei Maschinen oder Anlagen 2 gesteuert werden.

Jeder Anlage 2 sind in einem Kommunikationsmodell einer Automatisierungspyramide 3 hierarchisch gegliederte, in bestimmten Ebenen angeordnete Systeme zugeordnet. In einer Sensor-Aktorebene 4 sind Sensoren 11, die Prozesse der Anlage 2 überwachen, und Aktoren, die Prozesse in der Anlage 2 unterstützen oder kontrollieren, vorgesehen. In einer der Sensor-Aktorebene 4 übergeordneten Steuerungsebene 5 ist eine Maschinensteuerung vorgesehen, an welche die Sensoren 11 und/oder Aktoren über Ein- und Ausgänge angeschlossen sind. Die Maschinensteuerung ist zur Steuerung der Anlage 2 ausgebildet. In einer weiteren übergeordneten Prozessleitebene 6 ist ein Prozessleitsystem vorgesehen. In einer weiteren übergeordneten Betriebsleitebene 7 können Systeme zur Produktionsfeinplanung einer Produktionsdatenerfassung vorgesehen sein. In einer weiteren übergeordneten Unternehmensebene 8 können Systeme zur Produktionsgrobplanung und Bestellabwicklung vorgesehen sein.

Erfindungsgemäß sind die Sensoren 11 und/Aktoren des Automatisierungssystems 1 über das Internet mit einem verteilten Rechnernetzwerk 9 verbunden, das mehrere dezentrale Rechnereinheiten aufweist. Im vorliegenden Fall ist nur eine Rechnereinheit vorgesehen. Die Internetverbindungen 10 können drahtlos oder drahtgebunden ausgeführt sein. Das über das Internet eingebundene Rechnernetzwerk 9 bildet eine Cloud.

Wie Figur 1 zeigt, sind die Sensoren 11 und/oder Aktoren direkt mit dem Rechnernetzwerk 9 über Internetverbindungen 10 verbunden, so dass diese direkt, das heißt ohne Umweg mit dem Rechnernetzwerk 9 kommunizieren können. Die Kommunikation über die Internetverbindung 10 erfolgt über standardisierte Software-Protokolle, wie zum Beispiel dem OPC-UA-Protokoll. Diese Datenübertragung ist manipulationssicher, insbesonder dadurch, dass die übertragenen Informationen durch Prüfnummern abgesichert sind.

Als Informationen werden Daten und Metadaten übertragen, wobei Metadaten zur Charakterisierung beziehungsweise Spezifizierung von bestimmten übertragenen Daten vorgesehen sind.

Figur 2 zeigt schematisch den Aufbau eines Sensors 11 für das Automatisierungssystem 1 gemäß Figur 1. Der Sensor 11 weist in bekannter Weise ein Sensorelement 12 zur Objekterfassung und eine Auswerteeinheit 13 zur Auswertung von Sensorsignalen des Sensorelements 12 auf. Ist der Sensor 11 zur Distanzmessung ausgebildet, werden mit dem Sensorelement 12 Distanzwerte generiert, die als Daten in Form von Zahlenwerten an das Rechnernetzwerk 9 übertragen werden können. Diesen Daten sind Metadaten zugeordnet, die zum Beispiel definieren, dass es sich bei den Daten von Distanzwerte in mm oder cm handelt.

Der Sensor 11 umfasst weiterhin ein Kommunikationsmittel 14, ein Speichermittel 15 und ein Steuermittel 16. Mittels des Kommunikationsmittels 14 erfolgt die Kommunikation mit dem Rechnernetzwerk 9 über die Internetverbindung 10. Im Speichermittel 15 ist eine Kennung, insbesondere Adresse gespeichert, anhand derer der Sensor 11 eindeutig identifizierbar ist. Das Steuermittel 16 dient zur Ansteuerung der Anlage 2. Beispielsweise kann das Steuermittel 16 von einem Steuerausgang gebildet sein.

Einen der Figur 2 entsprechenden Aufbau weisen alle weiteren Sensoren 11 und/oder Aktoren des Automatisierungssystems 1 auf.

Die Sensoren 11 und/oder Aktoren übertragen Zustandsinformationen über die Internetverbindung 10 an das Rechnernetzwerk 9, wo diese gespeichert werden. Weiterhin können kundenspezifische Daten des Betreibers der Anlage 2 in der Rechnernetzwerk 9 gespeichert sein. Wenn diese Daten vertraulich sind, können diese beispielsweise nur von einem autorisierten Benutzer gespeichert werden.

Erfindungsgemäß werden nicht nur in der Maschinensteuerung Steuerbefehle zur Steuerung der jeweiligen Anlage 2 generiert, sondern auch im Rechnernetzwerk 9, wobei dort zur Generierung der Steuerbefehle insbesondere die dort gespeicherten Zustandsinformationen und/oder kundenspezifischen Daten herangezogen werden können. Die Aufgabenverteilung zwischen Maschinensteuerung und Rechnernetzwerk 9 erfolgt vorteilhaft über das Rechnernetzwerk 9, wobei hierzu beispielsweise ein autorisierter Benutzer entsprechende Befehle in das Rechnernetzwerk 9 eingibt.

Im vorliegenden Fall werden von jeder Maschinensteuerung schnell ablaufende Regel- und Steuervorgänge, die insbesondere in Echtzeit ablaufen, durchgeführt, wobei die Maschinensteuerung hierzu insbesondere in Abhängigkeit von Sensorsignalen der Sensoren 11 entsprechende Steuerbefehle generiert.

Zeitunkritische Vorgänge werden dagegen von dem Rechnernetzwerk 9 gesteuert. Insbesondere wird der Start der jeweiligen Anlage 2 von den Zustandsinformationen der Sensoren 11 und/oder Aktoren für diese Anlage 2 generiert. Dabei wird im Rechnernetzwerk 9 geprüft, ob alle Sensoren 11 und/oder Aktoren vorhanden sind. Alternativ oder zusätzlich kann das Rechnernetzwerk 9 einen Steuerbefehl einer Anlage 2 in Abhängigkeit von Zustandsinformationen von Sensoren 11 und/oder Aktoren, die einer weiteren Anlage 2 zugeordnet sind, generieren. Entsprechend kann das Rechnernetzwerk 9 auch Steuerbefehle zum Stoppen einer Anlage 2 generieren.

Mit den Steuerbefehlen des Rechnernetzwerks 9 kann auch eine Optimierung von Betriebsparametern von Sensoren 11 erfolgen. Im Rechnernetzwerk 9 können beispielsweise Informationen über Betriebsparameter mehrerer Sensoren 11 oder die Vorgeschichte des Betriebs von Sensoren 11 gespeichert sein. Abhängig hiervon kann das Rechnernetzwerk 9 Steuerbefehle zur Optimierung der Betriebsparameter an einen Sensor 11 senden. Beispiele hierfür sind die Belichtungszeiten von entfernungsmessenden Sensoren 11, die Verstärkung von Empfangssignalen vom Empfänger oder Sendeleistungen von Sendern von Sensoren 11, die optionalen Farbverteilungen von Kontrasttastern die Licht mit unterschiedlichen Farben emittieren oder auch Parameter von Sensoren 11 zur Codeerfassung wie Modulbreiten oder Abständen von zu erfassenden Codes.

Weiterhin kann auf diese Weise beispielsweise die Raumbeleuchtung eines Kamerasensors optimiert werden. Die Kamera des Kamerasensors erfasst dabei Bildinformationen, die sie an das Rechnernetzwerk 9 sendet. Das Rechnernetzwerk 9 berechnet einen region of interest der für eine Applikation benötigt wird und sendet ein Softwaremodul für die Auswertung dieses region of interest an den Kamerasensor. Der Kamerasensor aktualisiert entsprechend seine Auswertesoftware, steuert dementsprechend eine RGB-Beleuchtung an, dass der Bildkontrast der Bilder bei einer Farbe optimal ist und kommuniziert die optimale Parametereinstellung an das Rechnernetzwerk 9, wo diese abgespeichert wird.

Weiterhin ist es möglich, dass von wenigstens einem Sensor 11 oder Aktor periodisch Signallaufzeiten für die Kommunikation mit dem Rechnernetzwerk 9 ermittelt werden, und dass abhängig von der Signallaufzeit die applikationsspezifische Funktionalität des Sensors 11 oder Aktors definierende Softwaremodule in diesem Rechnernetzwerk 9 gespeichert oder in den Sensor 11 oder Aktor geladen sind.

Dadurch kann die Aufgabenverteilung zwischen Sensoren 11 und/oder Aktoren einerseits und dem Rechnernetzwerk 9 andererseits geändert werden.

Die Funktionalität des Automatisierungssystems 1 kann dadurch erweitert sein, dass abhängig von den im Rechnernetzwerk 9 gespeicherten Daten, insbesondere der Zustandsinformationen der Sensoren 11 und/oder Aktoren ermittelt wird, ob eine Wartung der Anlage notwendig ist oder ob einzelne Sensoren 11 und/oder Aktoren auszufallen drohen. Das Rechnernetzwerk 9 generiert dann Steuerbefehle, die direkt über Internetverbindungen 10 an Systeme des Automatisierungssystems 1, insbesondere Systeme der Unternehmens ebene 8 oder Betriebsleitebene 7, ausgegeben werden, um eine Wartung einzuleiten oder Bestellvorgänge von Sensoren 11 und/oder Aktoren auszulösen.

Figur 3 zeigt ein Ausführungsbeispiel des erfindungsgemäßen Automatisierungssystems 1 zur Steuerung einer Bearbeitungsmaschine 17, die zur Bearbeitung von Werkstücken dient. Die Bearbeitungsmaschine 17 weist mehrere Bearbeitungsstationen 17a bis 17d auf, die von den Werkstücken durchlaufen werden. Zur Prozesssteuerung sind mehrere binäre Sensoren 18a bis 18e wie zum Beispiel Lichtschranken vorgesehen, die an die nicht dargestellte Maschinensteuerung und an das ebenfalls nicht dargestellte Rechnernetzwerk 9 über die Internetverbindungen 10 angeschlossen sind.

Ein erster binärer Sensor 18a am Eingang der Bearbeitungsmaschine erkennt ein zu bearbeitendes Werkstück. Der binäre Sensor 18a sendet das entsprechende Sensorsignal an das Rechnernetzwerk 9, das aufgrund dessen die Betriebsbereitschaft der Bearbeitungsmaschine erkennt und einen Steuerbefehl an den binären Sensor 18a sendet, der über seine Speichermittel 15 die Bearbeitungsmaschine 17 startet. Der binäre Sensor 18a ermittelt dabei auch die Signallaufzeit für die Übersendung von Informationen über das Internet.

Dadurch aktiviert der binäre Sensor 18a über das Rechnernetzwerk 9 einen binären Sensor 18e am Ausgang der Bearbeitungsmaschine, welcher das Ende des Bearbeitungsprozesses des Werkstücks erkennen kann. Sobald dieser binäre Sensor 18e das Ende des Bearbeitungsprozesses erkannt hat, meldet er dieses an das Rechnernetzwerk 9. Das Rechnernetzwerk 9 generiert dann einen Steuerbefehl, der an den ersten binären Sensor 18a gesendet wird, so dass dieser nach einer von dem Rechnernetzwerk 9 vorgegebenen, von der Signallaufzeit abhängigen Time-out-Zeit die Bearbeitungsmaschine 17 abschaltet.

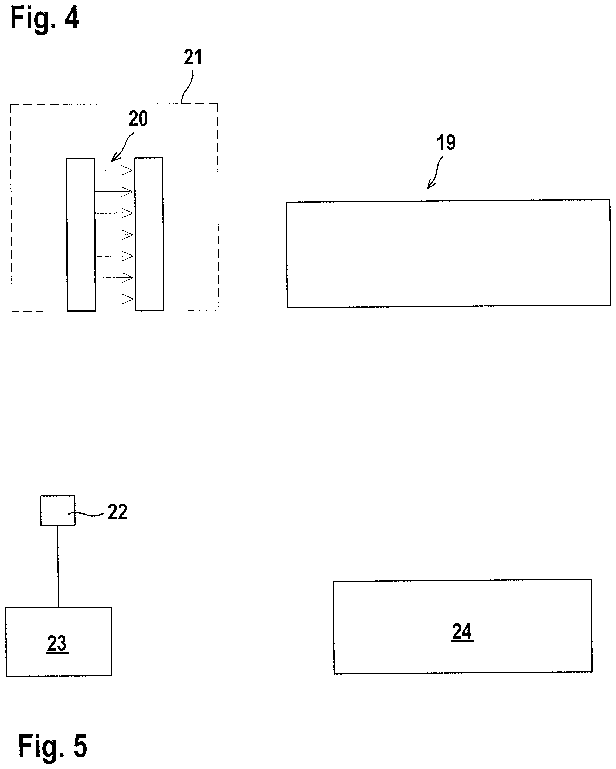

Figur 4 zeigt ein weiteres Ausführungsbeispiel des erfindungsgemäßen Automatisierungssystems 1. In diesem Fall dient das Automatisierungssystem 1 zur Steuerung einer Verpackungsmaschine 19, die eine nicht dargestellte Maschinensteuerung und eine Anordnung von Sensoren 11 und Aktoren, welche an die Maschinensteuerung angeschlossen sind, aufweist. Zudem sind die Sensoren 11 und Aktoren über die Internetverbindung 10 an das Rechnernetzwerk 9 angeschlossen (in Figur 4 ebenfalls nicht dargestellt). Dies gilt auch für einen Sensor 11 in Form eines Lichtgitters 20, das als messendes Lichtgitter 20 ausgebildet ist.

Das Lichtgitter 20 berechnet die Anzahl der in einem Stauraum 21 vorhandenen Gegenstände, welche in der Verpackungsmaschine 19 zu Gebinden weiterverarbeitet werden sollen. Das Rechnernetzwerk 9 teilt über die Internetverbindung 10 dem Lichtgitter 20 mit, wie viele Gegenstände ein Gebinde umfassen soll. Detektiert das Lichtgitter 20 eine genügende Anzahl von Gegenständen, wird die Verpackungsmaschine 19 über das Lichtgitter 20 gestartet. Weiterhin erhält die Verpackungsmaschine 19 vom Lichtgitter 20 die Information, wie viele Gegenstände zu einem Gebinde zusammengefasst werden sollen.

Detektiert das Lichtgitter 20 Fehler im Stauraum 21, meldet es dies dem Rechnernetzwerk 9, worauf dieses einen Serviceeinsatz auslöst.

Figur 5 zeigt ein weiteres Ausführungsbeispiel des erfindungsgemäßen Automatisierungssystems 1. In diesem Fall ist ein Distanzsensor 22 zur Erfassung von Abmessungen von Objekten 23 vorgesehen. Die Objekte 23 werden zur weiteren Verarbeitung einer Verpackungsmaschine 24 zugeführt, die wieder eine zugeordnete Maschinensteuerung von Sensoren 11 und/oder Aktoren aufweist, die mittels der Internetverbindungen 10 mit einem Rechnernetzwerk 9 verbunden sind.

In diesem Fall werden die mit dem Distanzsensor 22 ermittelten Abmessungen an das Rechnernetzwerk 9 gesendet. Dort werden die ermittelten Abmessungen mit Erfahrungswerten, das heißt Werten aus früheren Messungen, verknüpft, um beispielsweise ein Maß für die Zuverlässigkeit der Messwerte des Distanzsensors 22 zu erhalten. Diese Daten werden über das Rechnernetzwerk 9 an die Verarbeitungsmaschine 24 übermittelt, so dass abhängig hiervon die Arbeitsprozesse der Verarbeitungsmaschine 24 gewählt werden.

### Bezugszeichenliste

- (1): Automatisierungssystem
- (2): Anlagen
- (3): Automatisierungspyramide
- (4): Sensor-Aktorebene
- (5): Steuerungsebene
- (6): Prozessleitebene
- (7): Betriebsleitebene
- (8): Unternehmens ebene
- (9): Rechnernetzwerk
- (10): Internetverbindung
- (11): Sensor
- (12): Sensorelement
- (13): Auswerteeinheit
- (14): Kommunikationsmittel
- (15): Speichermittel
- (16): Steuermittel
- (17): Bearbeitungsmaschine
- (17a-17d): Bearbeitungsstationen
- (18a-18e): binäre Sensoren
- (19): Verpackungsmaschine
- (20): Lichtgitter
- (21): Stauraum
- (22): Distanzsensor
- (23): Objekt
- (24): Verarbeitungsmaschine

## Patentansprüche

1. Automatisierungssystem (1) zur Steuerung einer Maschine oder Anlage (2), mit einer Maschinensteuerung in einer Steuerungsebene (5) und einer Anzahl von der Maschine oder Anlage (2) zugeordneten Sensoren (11) und/oder Aktoren in einer Sensor-Aktorebene (4), wobei Sensorsignale der Sensoren (11) und/oder Aktorsignale der Aktoren der Maschinensteuerung zugeführt werden und in der Maschinensteuerung Steuerbefehle für die Maschine oder Anlage (2) generiert werden, wobei die Sensoren (11) und/oder Aktoren über das Internet mittels manipulationssicherer Protokolle direkt Informationen mit einem wenigstens eine Rechnereinheit aufweisenden Rechnernetzwerk (9) austauschen, wobei die Sensoren (11) anhand einer eindeutigen Kennung von dem Rechnernetzwerk (9) identifizierbar sind, und wobei in dem Rechnernetzwerk (9) Steuerbefehle für die Maschine oder Anlage (2) generiert werden, welche an wenigstens einen Sensor (11) oder Aktor übertragen werden, **dadurch gekennzeichnet, dass** in jedem Sensor (11) oder Aktor Steuermittel (16), die zur Steuerung der Maschine oder Anlage (2) in Abhängigkeit eines Steuerbefehls des Rechnernetzwerks (9) ausgebildet sind und Speichermittel (15) zur Speicherung der Kennung und Kommunikationsmittel (14) zur Kommunikation mit dem Rechnernetzwerk (9) vorhanden sind, wobei mit den Steuermitteln (16) abhängig von einem Steuerbefehl des Rechnernetzwerks (9) die Maschine oder Anlage (2) direkt und ohne Umweg über die Maschinensteuerung gesteuert wird.

2. Automatisierungssystem (1) nach Anspruch 1, **dadurch gekennzeichnet, dass** in einem Sensor (11) oder Aktor generierte Zustandsinformationen mit oder ohne einen Selbsttest an das Rechnernetzwerk (9) übertragen werden.

3. Automatisierungssystem (1) nach Anspruch 1, **dadurch gekennzeichnet, dass** im Rechnernetzwerk (9) maschinen- oder anlagenrelevante Daten gespeichert sind, welche an Sensoren (11) und/oder Aktoren übertragbar sind.

4. Automatisierungssystem (1) nach Anspruch 1, **dadurch gekennzeichnet, dass** die Steuerungsebene (5) und die Sensor-Aktorebene (4) Bestandteil eines Kommunikationsmodells einer Automatisierungspyramide (3) mit weiteren Ebenen ist, wobei das Rechnernetzwerk (9) direkt mit Systemen in den weiteren Ebenen kommuniziert.

5. Automatisierungssystem (1) nach einem der Ansprüche 1 bis 4, **dadurch gekennzeichnet, dass** das Rechnernetzwerk (9) direkt mit Sensoren (11) und/ oder Aktoren oder Systemen in weiteren Ebenen eines Kommunikationsmodells einer Automatisierungspyramide (3) von verschiedenen Maschinen oder Anlagen (2) kommuniziert.

6. Automatisierungssystem (1) nach einem der Ansprüche 1 bis 5, **dadurch gekennzeichnet, dass** abhängig von geforderten Reaktionszeiten für die Durchführung von Steuerbefehlen diese von der Maschinensteuerung oder von dem Rechnernetzwerk (9) generiert werden.

7. Automatisierungssystem (1) nach Anspruch 6, **dadurch gekennzeichnet, dass** Steuerbefehle mit kurzen Reaktionszeiten von der Maschinensteuerung und Steuerbefehle mit längeren Reaktionszeiten von dem Rechnernetzwerk (9) durchgeführt werden.

8. Automatisierungssystem (1) nach einem der Ansprüche 1 bis 7, **dadurch gekennzeichnet, dass** von wenigstens einem Sensor (11) oder Aktor periodisch Signallaufzeiten für die Kommunikation mit dem Rechnernetzwerk (9) ermittelt werden, und dass abhängig von der Signallaufzeit die applikationsspezifische Funktionalität des Sensors (11) oder Aktors definierende Softwaremodule in dem Rechnernetzwerk (9) gespeichert oder in den Sensor (11) oder Aktor geladen sind.

9. Automatisierungssystem (1) nach einem der Ansprüche 1 bis 8, **dadurch gekennzeichnet, dass** die Kommunikation mit dem Rechnernetzwerk (9) über standardisierte Software-Protokolle, insbesondere über OPC-UA-Protokolle erfolgt.

10. Automatisierungssystem (1) nach Anspruch 9, **dadurch gekennzeichnet, dass** zwischen dem Rechnernetzwerk (9) und weiteren Teilnehmern, insbesondere Sensoren (11) und/oder Aktoren Informationen ausgetauscht werden, welche Daten und die Daten charakterisierende Metadaten enthalten.

11. Automatisierungssystem (1) nach Anspruch 10, **dadurch gekennzeichnet, dass** die übertragenen Informationen mit Prüfnummern abgesichert sind.

12. Automatisierungssystem (1) nach einem der Ansprüche 1 bis 11, **dadurch gekennzeichnet, dass** die Sensoren ganz oder teilweise optische Sensoren, insbesondere zur Objektdetektion, Objektidentifikation oder zur geometrischen Messung eines Objektabstands, einer Oberflächenkontur oder eines Objektvolumens sind.

## Claims

1. An automation system (1) for controlling a machine or an installation (2), with a machine controller in a control level (5) and a number of sensors (11) and/or actuators assigned to the machine or installation (2) in a sensor-actuator level (4), wherein sensor signals from the sensors (11) and/or actuator signals from the actuators are fed to the machine control system and control commands for the machine or installation (2) are generated in the machine control system, wherein the sensors (11) and/or actuators exchange information directly with a computer network (9) comprising at least one computer unit via the Internet by means of tamper-proof protocols, wherein the sensors (11) can be identified by the computer network (9) by means of a unique identifier, and wherein control commands for the machine or installation (2) are generated in the computer network (9), which are transmitted to at least one sensor (11) or actuator, **characterised in that** in each sensor (11) or actuator there are control means (16) which are designed to control the machine or installation (2) as a function of a control command from the computer network (9) and memory means (15) for storing the identifier and communication means (14) for communicating with the computer network (9), whereby the control means (16) are used to control the machine or installation (2) directly and without a diversion via the machine control system, depending on a control command from the computer network (9).

2. An automation system (1) according to claim 1, **characterised in that** status information generated in a sensor (11) or actuator is transmitted to the computer network (9) with or without a self-test.

3. An automation system (1) according to claim 1, **characterised in that** data relevant to the machine or installation are stored in the computer network (9), which data can be transmitted to sensors (11) and/or actuators.

4. An automation system (1) according to claim 1, **characterised in that** the control level (5) and the sensor-actuator level (4) are part of a communication model of an automation pyramid (3) with further levels, wherein the computer network (9) communicates directly with systems in the further levels.

5. An automation system (1) according to one of claims 1 to 4, **characterised in that** the computer network (9) communicates directly with sensors (11) and/or actuators or systems in further levels of a communication model of an automation pyramid (3) of various machines or installations (2).

6. An automation system (1) according to one of claims 1 to 5, **characterised in that**, depending on the required response times for the execution of control commands, these are generated by the machine controller or by the computer network (9).

7. An automation system (1) according to claim 6, **characterised in that** control commands with short response times are executed by the machine controller and control commands with longer response times are executed by the computer network (9).

8. An automation system (1) according to one of claims 1 to 7, **characterised in that** signal propagation times for communication with the computer network (9) are periodically determined by at least one sensor (11) or actuator, and **in that** software modules defining the application-specific functionality of the sensor (11) or actuator are stored in the computer network (9) or loaded into the sensor (11) or actuator as a function of the signal propagation time.

9. An automation system (1) according to one of claims 1 to 8, **characterised in that** communication with the computer network (9) takes place via standardised software protocols, in particular via OPC UA protocols.

10. An automation system (1) according to claim 9, **characterised in that** information containing data and metadata characterising the data is exchanged between the computer network (9) and other participants, in particular sensors (11) and/or actuators.

11. An automation system (1) according to claim 10, **characterised in that** the transmitted information is secured with check numbers.

12. An automation system (1) according to one of claims 1 to 11, **characterised in that** the sensors are wholly or partially optical sensors, in particular for object detection, object identification or for geometric measurement of an object distance, a surface contour or an object volume.

## Revendications

1. Système d'automatisation (1) pour contrôler une machine ou une installation (2), avec un dispositif de commande de machine dans un niveau de contrôle (5) et un certain nombre de capteurs (11) et/ou d'actionneurs assignés à la machine ou l'installation (2) dans un niveau de capteur-actionneur (4), les signaux des capteurs (11) et/ou les signaux des actionneurs sont transmis au système de commande de la machine et les instructions de commande de la machine ou de l'installation (2) sont générées dans le système de commande de la machine, les capteurs (11) et/ou les actionneurs échangeant des informations directement avec un réseau informatique (9) comprenant au moins une unité informatique via l'Internet au moyen de protocoles protégés contre les manipulations, dans lequel les capteurs (11) peuvent être identifiés par le réseau informatique (9) au moyen d'un identifiant unique, et dans lequel les instructions de commande de la machine ou de l'installation (2) sont générées dans le réseau informatique (9) et transmises à au moins un capteur (11) ou un actionneur, **caractérisé par** la présence, dans chaque capteur (11) ou actionneur, de moyens de commande (16) conçus pour commander la machine ou l'installation (2) en fonction d'un ordre de commande provenant du réseau informatique (9), de moyens de mémoire (15) pour stocker l'identificateur et de moyens de communication (14) pour communiquer avec le réseau informatique (9), les moyens de commande (16) sont utilisés pour commander la machine ou l'installation (2) directement et sans passer par le système de commande de la machine, en fonction d'un ordre de commande provenant du réseau informatique (9).

2. Système d'automatisation (1) selon la revendication 1, **caractérisé par le fait que** les informations d'état générées dans un capteur (11) ou un actionneur sont transmises au réseau informatique (9) avec ou sans autotest.

3. Système d'automatisation (1) selon la revendication 1, **caractérisé par le fait que** les données relatives à la machine ou l'installation sont stockées dans le réseau informatique (9), ces données pouvant être transmises aux capteurs (11) et/ou aux actionneurs.

4. Système d'automatisation (1) selon la revendication 1, **caractérisé par le fait que** le niveau de commande (5) et le niveau capteur-actionneur (4) font partie d'un modèle de communication d'une pyramide d'automatisation (3) avec d'autres niveaux, dans laquelle le réseau informatique (9) communique directement avec les systèmes des autres niveaux.

5. Système d'automatisation (1) selon l'une des revendications 1 à 4, **caractérisé par le fait que** le réseau informatique (9) communique directement avec des capteurs (11) et/ou des actionneurs ou des systèmes dans d'autres niveaux d'un modèle de communication d'une pyramide d'automatisation (3) de diverses machines ou installations (2).

6. Système d'automatisation (1) selon l'une des revendications 1 à 5, **caractérisé par le fait que**, selon les temps de réponse requis pour l'exécution des ordres de commande, ceux-ci sont générés par le dispositif de commande de la machine ou par le réseau informatique (9).

7. Système d'automatisation (1) selon la revendication 6, **caractérisé par le fait que** les instructions de commande avec des temps de réponse courts sont exécutées par le dispositif de commande de la machine et les instructions de commande avec des temps de réponse plus longs sont exécutées par le réseau informatique (9).

8. Système d'automatisation (1) selon l'une des revendications 1 à 7, **caractérisé par le fait que** les temps de propagation des signaux pour la communication avec le réseau informatique (9) sont déterminés périodiquement par au moins un capteur (11) ou un actionneur, et **par le fait que** les modules logiciels définissant la fonctionnalité spécifique à l'application du capteur (11) ou de l'actionneur sont stockés dans le réseau informatique (9) ou chargés dans le capteur (11) ou l'actionneur en fonction du temps de propagation des signaux.

9. Système d'automatisation (1) selon l'une des revendications 1 à 8, **caractérisé par le fait que** la communication avec le réseau informatique (9) s'effectue via des protocoles logiciels standardisés, en particulier via des protocoles OPC UA.

10. Système d'automatisation (1) selon la revendication 9, **caractérisé en ce que** des informations contenant des données et des métadonnées caractérisant les données sont échangées entre le réseau informatique (9) et d'autres participants, en particulier des capteurs (11) et/ou des actionneurs.

11. Système d'automatisation (1) selon la revendication 10, **caractérisé par le fait que** les informations transmises sur sont sécurisées par des numéros de contrôle.

12. Système d'automatisation (1) selon l'une des revendications 1 à 11, **caractérisé par le fait que** les capteurs sont entièrement ou partiellement des capteurs optiques, notamment pour la détection d'objets, l'identification d'objets ou la mesure géométrique de la distance d'un objet, du contour d'une surface ou du volume d'un objet.
